# EUROPEAN PATENT APPLICATION

(11) **EP 4 545 718 A1**
(43) Date of publication of application: **30.04.2025**
(21) Application number: 23854520.6
(22) Date of filing: 18.08.2023
(51) Int. Cl.: E03D 11/02, E03D 1/00, E03D 5/10

(54) **MIXING DISTRIBUTION VALVE, WATER-CLOSET BOWL FLUSHING SYSTEM AND WATER-CLOSET BOWL**

(30) Priority: 18.08.2022 CN 202210992687; 18.08.2022 CN 202210993995
(71) Applicant: Quanzhou Komoo Intelligent Kitchen & Bath Co., Ltd, Quanzhou, Fujian 362300 (CN)
(72) Inventor: LIN, Xiaofa, Xiamen, Fujian 361008 (CN); LIN, Xiaoshan, Xiamen, Fujian 361008 (CN); LIU, Zuhua, Xiamen, Fujian 361008 (CN); XU, Yanxin, Xiamen, Fujian 361008 (CN); LIN, Shan, Xiamen, Fujian 361008 (CN)
(74) Representative: Savi, Massimiliano
(86) International application number: PCT/CN2023/113747
(87) International publication number: WO 2024/037624

(57) **Abstract**

Provided in the present invention are a mixing distribution valve, a water-closet bowl flushing system and a water-closet bowl. The mixing distribution valve comprises a water path distribution module and a water pressure water inlet module; the water path distribution module is provided with a first water inlet channel, a distribution chamber and a plurality of first water outlet channels; the water pressure water inlet module is provided with a second water inlet channel and a first water path; and the first water inlet channel and the first water path are separately in communication with the distribution chamber. The water path distribution module is provided with a first switching mechanism, and the first switching mechanism controls whether each first water outlet channel is in communication with a third chamber. A second switching mechanism is arranged on the water pressure water inlet module, and the second switching mechanism controls whether the second water inlet channel is in communication with the first water path. When the mixing distribution valve of the present invention is applied to a water-closet bowl flushing system, the mixing distribution valve can be connected to a water pump and a tap water pipe at the same time, so as to adapt to different application environments of a water-closet bowl, thus achieving the purposes of saving energy and meeting flushing requirements.

## Description

The present application is based on and claims priorities to Chinese patent application No. 202210992687.6, filed to CNIPA on August 18, 2022 and entitled "Hybrid Distribution Valve, Toilet Flushing System and Toilet", and Chinese patent application No. 202210993995.0, filed to CNIPA on August 18, 2022 and entitled "Hybrid Integrated Valve, Toilet Flushing System and Toilet", the disclosed contents of which are hereby incorporated into text of this application in their entireties.

### Technical Field

The present application relates to the field of sanitary ware, and particularly relates to a hybrid distribution valve, a toilet flushing system and a toilet.

### Background

At present, a water tank of a smart toilet generally is a low water tank, resulting in a low water potential energy in the water tank. Therefore, relying solely on the potential energy of water in the water tank for flushing will affect flushing effect. For this reason, at present, a flushing method with water pump pressurization is often used. After the water pump pressurizes water from the water tank, the water pump outputs water to a distribution valve, and the distribution valve successively distributes flushing water to a ring-washing water path and a spray water path of the toilet. However, the flushing method with water pump pressurization also has following shortcomings: the water pump consumes a lot of power and cannot be used when power is cut off, which will cause the toilet to be unable to use normally. In order to solve this technical problem, some add a water inlet valve group on the basis of the water pump and the distribution valve. The water inlet valve group includes a closed water tank, a first solenoid valve and a second solenoid valve. The closed water tank provides flushing water to the ring-washing water path of the toilet through the first solenoid valve, and the closed water tank provides flushing water to the spray water path of the toilet through the second solenoid valve. Although this way of adding the water inlet valve group solves the problem that the toilet is not able to be used normally due to the failure of the water pump to work when power is cut off, the water inlet valve group is additionally introduced, which leads to shortcomings such as a complex overall structure and a greatly increased cost.

The distribution valve of the prior art is basically a single water inlet type, and after a water inlet end of the distribution valve is connected with a water inlet end of the water pump, it can no longer be connected with the tap water pipeline, but the toilet solely relies on the water pump to pressurize to achieve flushing, which has the above-mentioned problem that the water pump cannot be used when power is cut off, and the water pump consumes a lot of power, which is not conducive to energy saving. If the water inlet end of the distribution valve is connected to the tap water pipeline, the toilet can be flushed by tap water supply. However, during the peak water consumption period, a water pressure of tap water is unstable, which will affect the flushing, or when the tap water pressure is low, the flushing strength is not enough, which will also affect the flushing effect. Therefore, there is an urgent need for a distribution valve with multi-way water inlet function to facilitate switching the toilet flushing mode between tap water supply and water pump pressurization to adapt to different application scenarios of a toilet.

### Summary

Aiming at the technical problems existing in the prior art, the present application provides a hybrid distribution valve, a toilet flushing system and a toilet, which are used for solving the shortcomings existing in the distribution valve of the prior art.

The technical solution adopted by the present application to solve the technical problem is as follows.

A hybrid distribution valve includes a water path distribution module and a pressure water inlet module. The water path distribution module is provided with a first water inlet channel, a distribution chamber and multiple first water outlet channels, the pressure water inlet module is provided with a second water inlet channel and a first water path, and the first water inlet channel and the first water path are respectively in communication with the distribution chamber. The water path distribution module is provided with a first switching mechanism, and the first switching mechanism controls whether a first water outlet channel is in communication with the distribution chamber. The pressure water inlet module is provided with a second switching mechanism, and the second switching mechanism controls whether the second water inlet channel is in communication with the first water path.

A hybrid distribution valve includes a water path distribution module and a pressure water inlet module. The water path distribution module is provided with a first water inlet channel, a distribution chamber and multiple first water outlet channels, the pressure water inlet module is provided with a second water inlet channel and a first water path, the second water inlet channel and the first water path are respectively in communication with the distribution chamber, and a movable water-stop component is movably provided within the distribution chamber. When water enters the first water inlet channel, the movable water-stop component is pushed by a water pressure to prevent water from flowing to the first water path. When water enters the first water path, the movable water-stop component is pushed by a water pressure to prevent water from flowing to the second water inlet channel. The water path distribution module is provided with a first switching mechanism, and the first switching mechanism controls whether a first water outlet channel is in communication with the distribution chamber; the pressure water inlet module is provided with a second switching mechanism, and the second switching mechanism controls whether the second water inlet channel is in communication with the first water path.

Further, the first switching mechanism includes a first switching component for controlling switch of communication between the distribution chamber and a first water outlet channel, and a first driving component for driving the first switching component to act. The second switching mechanism includes a second switching component for controlling whether the second water inlet channel is in communication with the first water path, and a second driving component for driving the second switching component to act.

Further, the water path distribution module is further provided with a first transition chamber, the first switching component is provided in the first transition chamber, and the first transition chamber is divided into a first valve chamber and a first back pressure chamber by the first switching component. The first valve chamber is in communication with the distribution chamber, and the first valve chamber is in communication with the first back pressure chamber through a small hole provided in the first switching component. The first back pressure chamber is provided with a first pressure relief port, and the first driving component controls whether the first pressure relief port is opened, so that the first switching component controls switch of communication between the first valve chamber and the multiple first water outlet channels according to a change of water pressure in the first back pressure chamber. The pressure water inlet module is further provided with a second transition chamber, the second switching component is provided in the second transition chamber, and the second transition chamber is divided into a second valve chamber and a second back pressure chamber by the second switching component. The second valve chamber is in communication with the second water inlet channel, and the second valve chamber is in communication with the second back pressure chamber through a small hole provided in the second switching component. The second back pressure chamber is provided with a second pressure relief port, and the second driving component controls whether the second pressure relief port is opened, so that the second switching component controls whether the second valve chamber is in communication with the first water path according to a change of water pressure in the second back pressure chamber.

Further, the first switching component includes a water-stop membrane, a sliding rod, and a sealing pad. The water-stop membrane is sleeved at one end of the sliding rod, and the sealing pad is sleeved at the other end of the sliding rod. A first communication port is provided between the first valve chamber and a portion of the first water outlet channels, a second communication port is provided between the first valve chamber and the remaining first water outlet channels, and the sliding rod passes through the first communication port and the second communication port. The water-stop membrane controls whether the first communication port is opened, and the sealing pad controls whether the second communication port is opened. A third communication port is provided between the second valve chamber and the first water path, and the second switching component is a membrane component that controls whether the third communication port is opened.

Further, the first driving component and the second driving component are a mechanical driving mechanism or an electronically controlled driving mechanism, respectively, and the electronically controlled driving mechanism includes any one of a motor driving mechanism and a solenoid valve head. The electronically controlled driving mechanism may be powered by a super-capacitor and/or a backup battery.

Further, a one-way valve is further included. The one-way valve is mounted to the first water inlet channel, and the one-way valve allows only water to flow from the first water inlet channel into the distribution chamber.

Further, a driving module is further included. The driving module is provided between the first driving component and the second driving component, and the driving module controls the first driving component and the second driving component to act coordinately so as to switch the communication between the distribution chamber and the first water outlet channels when water enters the first water inlet channel, and switch the communication between the distribution chamber and the first water outlet channels when water enters the first water path.

Further, the driving module includes a motor and a switching rotor, the switching rotor is driven by the motor, a first driving part and a second driving part are provided on the switching rotor. The switching rotor has a first working state in which the first driving part pushes the first driving component, and a second working state in which the second driving component is first pushed by the first driving part and then the first driving component is pushed by the second driving part.

Further, the first driving part and the second driving part are provided at an edge of a same end of the switching rotor and are distributed along a circumferential direction of the switching rotor; a circumferential dimension of the first driving part is greater than a circumferential dimension of the second driving part. The switching rotor is further provided with an operation part adapted to manually rotate the switching rotor.

Further, the distribution chamber includes a first chamber body, a second chamber body and a third chamber body, the first chamber body is in communication with the first water inlet channel, and the second chamber body is in communication with the first water path. A first communication port is provided between the first chamber body and the third chamber body, a second communication port is provided between the second chamber body and the third chamber body, and the movable water-stop component is movably provided in the third chamber body. When water enters the first water inlet channel the movable water-stop component is pushed by a water pressure to close the second communication port. When water enters the first water path, the movable water-stop component is pushed by a water pressure to close the third chamber body of the first communication port. The first switching mechanism controls whether a first water outlet channel is in communication with the third chamber body of the distribution chamber. A portion of the third chamber body between the first communication port and the second communication port is an annular space, and the movable water-stop component is an annular two-way unidirectional valve sheet that is sleeved in the annular space.

Further, the first driving component includes a first driving rod and a first on-off component for opening and closing the first pressure relief port. The first on-off component is movably provided in the water path distribution module, and is fitted with the water path distribution module through a first reset component. The first driving rod is movably connected with the first on-off component, and the first driving rod is pushed to drive the first on-off component. The second driving component includes a second driving rod and a second on-off component for opening and closing the second pressure relief port. The second on-off component is movably provided in the pressure water inlet module, and is fitted with the pressure water inlet module through a second reset component. The second driving rod is movably connected with the second on-off component, and the second driving rod is pushed to drive the second on-off component.

Further, the first switching component includes a water-stop membrane, a sliding rod, and a sealing pad. The water-stop membrane is sleeved at one end of the sliding rod, and the sealing pad is sleeved at the other end of the sliding rod. A third communication port is provided between the first valve chamber and a portion of the first water outlet channels, a fourth communication port is provided between the first valve chamber and the remaining first water outlet channels, and the sliding rod passes through the third communication port and the fourth communication port. The water-stop membrane controls whether the third communication port is opened, and the sealing pad controls whether the fourth communication port is opened. A fifth communication port is provided between the second valve chamber and the first water path, and the second switching component is a membrane component that controls whether the fifth communication port is opened.

Further, the water path distribution module is further provided with an atmospheric port communicating with the distribution chamber, and the atmospheric port is controlled to open and close by an anti-siphon float provided in the distribution chamber. An outlet of the first water path is opposite to the anti-siphon float.

Further, the pressure water inlet module is further provided with a second water outlet channel and a second water path, and the second water outlet channel is in communication with the second water inlet channel through the second water path.

The present application also provides a toilet flushing system, which includes a water tank and a water pump, a water inlet end of the water pump being in communication with the water tank. The toilet flushing system further includes the hybrid distribution valve described above in the present application. A water outlet end of the water pump is in communication with the first water inlet channel, and the second water inlet channel is used for connecting to a normal pressure water source. Among the multiple first water outlet channels, a portion of the first water outlet channels are used to be in communication with a ring-washing part of the toilet body, and the remaining first water outlet channels are used to be in communication with a spray part of the toilet.

Further, the pressure water inlet module is further provided with a second water outlet channel and a second water path, the second water outlet channel is in communication with the second water inlet channel through the second water path, and the second water outlet channel is in communication with a water inlet end of a water inlet valve provided in the water tank.

The present application further provides a toilet, including a toilet body and a toilet flushing system described above in the present application. Among the multiple first water outlet channels, a portion of the first water outlet channels are in communication with a ring-washing part of the toilet body, and the remaining first water outlet channels are in communication with a spray part of the toilet body. The ring-washing part includes one or a combination of a ring-washing water path, a ring-washing port, and a ring-washing nozzle, and the spray part includes one or a combination of a spray water path, a spray port, and a spray nozzle.

Compared with the prior art, the present application has the following beneficial effects.
1. Because the hybrid distribution valve of the present application includes the water path distribution module and the pressure water inlet module, the hybrid distribution valve of the present application has a two-way water inlet function on the basis of a distribution function, and when applied to the toilet flushing system, the hybrid distribution valve of the present application may be simultaneously connected with the water pump and the tap water pipeline, so as to facilitate achieving the toilet flushing mode switched between a tap water supply and a water pump pressurization, to adapt to different application scenarios of a toilet, thus achieving the purposes of saving energy and meeting flushing requirements. In addition, the design of the hybrid distribution valve of the present application enables that the toilet flushing system does not need to introduce an additional water inlet valve group, so that an overall structure of the toilet flushing system is simpler and the cost is lower.
2. The hybrid distribution valve of the present application introduces a pilot valve design at a position where the first switching component/the second switching component is located, uses a pressure difference of a water pressure receiving surface to perform function switching, and has higher structural reliability.
3. The atmospheric port and the anti-siphon float are provided so that when the hybrid distribution valve of the present application is applied to the toilet flushing system, water in the water tank of the toilet can be prevented from being sucked back into the tap water pipeline when the tap water pipeline connected to the second water inlet channel has negative pressure.
4. The pressure water inlet module is further provided with the second water outlet channel, so that the hybrid distribution valve of the present application may also directly provide water replenishment for components such as the water inlet valve of the water tank of the toilet, thereby reducing a configuration of tap water pipelines and angle valves for supplying water to components such as the water inlet valve.
5. The first water inlet channel is provided with a one-way valve that only allows water to flow into the distribution chamber from the first water inlet channel, so that when water enters the first water path, the water does not crossflow from the distribution chamber to the first water inlet channel.
6. The driving module controls a coordinated action of the first driving component and the second driving component, so that the first driving component and the second driving component need not be controlled separately, so that an overall structure of the hybrid distribution valve is more compact, a volume is smaller, and more energy-efficient. In particular, the driving module includes the motor and the switching rotor, has a simple structure and is easy to control.

The present application will be described in further detail below with reference to the accompanying drawings and embodiments. However, a hybrid distribution valve and a toilet flushing system and a toilet of the present application are not limited to the embodiments.

### Brief Description of Drawings

FIG. 1 is a schematic exploded view of a hybrid distribution valve according to a first embodiment of the present application;
FIG. 2 is a schematic three-dimensional view of a structure of a hybrid distribution valve according to a first embodiment of the present application;
FIG. 3 is a first cross-sectional view of a hybrid distribution valve according to a first embodiment of the present application;
FIG. 4 is a second cross-sectional view of a hybrid distribution valve according to a first embodiment of the present application;
FIG. 5 is a cross-sectional view of a hybrid distribution valve in a state in which water is fed into a first water inlet channel according to a first embodiment of the present application;
FIG. 6 is a cross-sectional view of a hybrid distribution valve in a state in which water is discharged from one of first water outlet channels according to a first embodiment of the present application;
FIG. 7 is a cross-sectional view of a hybrid distribution valve in a state in which water is discharged from another first water outlet channel according to a first embodiment of the present application;
FIG. 8 is a partial cross-sectional view of a hybrid distribution valve in a state in which water is fed into a second water inlet channel according to a first embodiment of the present application;
FIG. 9 is a cross-sectional view of a hybrid distribution valve when water flows from a second water inlet channel to a distribution chamber according to a first embodiment of the present application;
FIG. 10 is a schematic view of a structure of a toilet flushing system/a toilet according to a first embodiment of the present application;
FIG. 11 is a schematic exploded view of a hybrid distribution valve according to a second embodiment of the present application;
FIG. 12 is a schematic three-dimensional view of a structure of a hybrid distribution valve according to a second embodiment of the present application;
FIG. 13 is a schematic exploded view of a driving module according to a second embodiment of the present application;
FIG. 14 is a cross-sectional view of a fitting between a first switching component and a valve body assembly according to a second embodiment of the present application;
FIG. 15 is a side view of a hybrid distribution valve in an initial state according to a second embodiment of the present application;
FIG. 16 is a first cross-sectional view of a hybrid distribution valve in a state in which water is fed into a first water inlet channel according to a second embodiment of the present application;
FIG. 17 is a second cross-sectional view of a hybrid distribution valve in a state in which water is fed into a first water inlet channel according to a second embodiment of the present application;
FIG. 18 is a side view of a hybrid distribution valve when a first driving component is driven according to a second embodiment of the present application;
FIG. 19 is a partial cross-sectional view of a hybrid distribution valve in a state in which water is discharged from one of first water outlet channels according to a second embodiment of the present application;
FIG. 20 is a partial cross-sectional view of a hybrid distribution valve in a state in which water is discharged from another first water outlet channel according to a second embodiment of the present application;
FIG. 21 is a side view of a hybrid distribution valve when a second driving component is driven according to a second embodiment of the present application;
FIG. 22 is a first cross-sectional view of a hybrid distribution valve in a state in which water is fed into a second water inlet channel according to a second embodiment of the present application;
FIG. 23 is a second cross-sectional view of a hybrid distribution valve in a state in which water is fed into a second water inlet channel according to a second embodiment of the present application;
FIG. 24 is a side view of a hybrid distribution valve when a first driving component or the like is driven according to a second embodiment of the present application; and
FIG. 25 is a schematic view of a structure of a toilet flushing system/a toilet according to a second embodiment of the present application.

1-valve body assembly; 11-first water inlet channel; 12/13-first water outlet channel; 14-second water inlet channel; 15-distribution chamber; 151-first communication port-II; 152-second communication port-II; 153-first chamber body; 154-second chamber body; 155-third chamber body; 16-first water path; 17-first transition chamber; 171-first valve chamber; 172-first back pressure chamber; 173-first pressure relief port; 18-second transition chamber; 181-second valve chamber; 182-second back pressure chamber; 183-second pressure relief port; 19-first communication port-I; 110-second communication port-I; 111-third communication port-I; 112-atmospheric port; 113-second water outlet channel; 114-second water path; 19'-third communication port-11; 110'-fourth communication port; 111'-fifth communication port; 2-first solenoid valve head; 21-fixation bracket; 22-coil assembly; 23-plug; 3-second solenoid valve head; 31-plug; 4-first elastic member; 41-second elastic member; 2'-first driving component; 21'-first on-off component; 22'-first driving rod; 23'-first reset component; 3'-second driving component; 31'-second on-off component; 32-second driving rod; 33-second reset component; 4'-driving module; 41'-motor; 42-switching rotor; 421-first driving part; 422-second driving part; 423-operation part; 43-housing assembly; 5-first switching component; 51-sliding rod; 52-water-stop membrane; 53-sealing pad; 6-second switching component; 61-water-stop membrane; 62-supporting disk; 7-one-way valve; 7'-two-way unidirectional valve sheet; 8-anti-siphon float; 9-water path distribution module; 91-main valve body; 92-anti-siphon cover; 93-valve cover; 94-sealing ring; 10-pressure water inlet module; 20-water tank; 30-water pump; 40-water inlet valve; 50-three-way pipe; 60-angle valve; 70-toilet body; 71-ring-washing nozzle; 72-spray nozzle; 80-smart toilet cover.

### Detailed Description

In the present application, terms "first", "second" and the like are only used to distinguish similar objects, and are not necessarily used to describe a specific order or sequence, nor are they to be understood as indicating or implying relative importance. In the description, the orientation or positional relationship indicated by "up", "down" and the like is based on the orientation or positional relationship shown in the drawings, and is only for the convenience of describing the present application, and does not indicate or imply that the referred device must have a specific orientation, be constructed and operate in a specific orientation, and thus cannot be understood as a limitation on the scope of protection of the present application. For those of ordinary skills in the art, specific meanings of the above terms in the present application can be understood according to specific situations. In addition, in the description of the present application, unless otherwise specified, "a plurality of/multiple" refers to two or more.

### First Embodiment

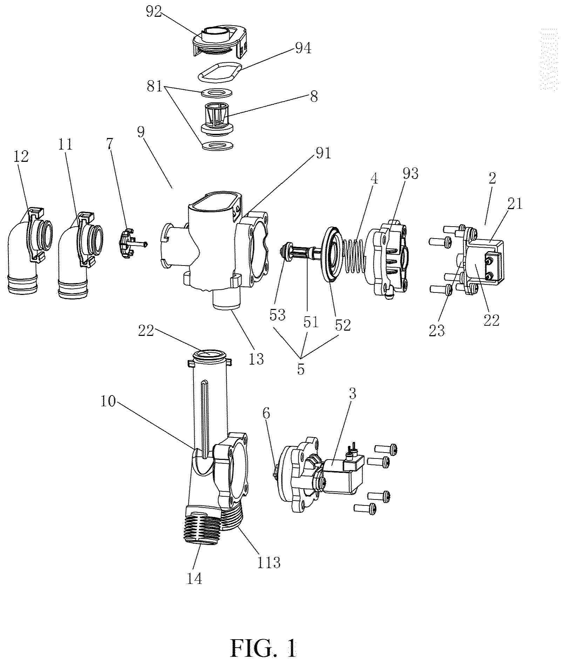

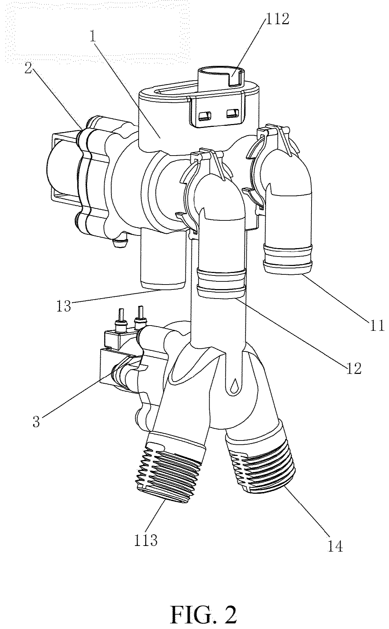

As shown in FIGS. 1 to 9, a hybrid distribution valve of the present application includes a water path distribution module 9 and a pressure water inlet module 10, and the water path distribution module 9 and the pressure water inlet module are integrated together to form a valve body assembly 1. The water path distribution module 9 is provided with a first water inlet channel 11, a distribution chamber 15 and multiple first water outlet channels 12, 13. The pressure water inlet module 10 is provided with a second water inlet channel 14 and a first water path 16, and the first water inlet channel 11 and the first water path 16 are respectively in communication with the distribution chamber 15. The water path distribution module 9 is provided with a first switching mechanism, and the first switching mechanism controls whether a first water outlet channel is in communication with the distribution chamber 15. The pressure water inlet module 10 is provided with a second switching mechanism, and the second switching mechanism controls whether the second water inlet channel 14 is in communication with the first water path 16. Thus, when the hybrid distribution valve of the present application is used in conjunction with the water pump to achieve flushing of the toilet and when the water pump fails to work due to power failure or the like, the hybrid distribution valve of the present application may also connect to a normal pressure water source by the second water inlet channel 14, thereby ensuring normal flushing of the toilet. The normal pressure water source refers to a municipal tap water supply source.

The first switching mechanism includes a first switching component 5 for controlling the switch of communication between the distribution chamber 15 and the first water outlet channels, and a first driving component 2 for driving the first switching component 5 to act. The second switching mechanism includes a second switching component 6 for controlling whether the second water inlet channel 14 is in communication with the first water path 16, and a second driving component 3 for driving the second switching component 6 to act.

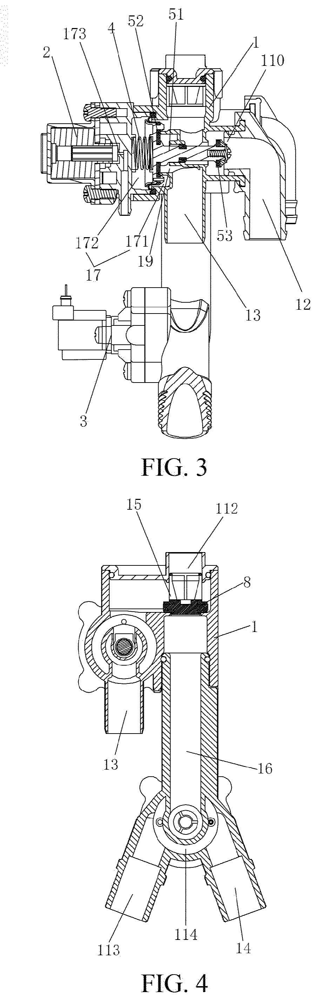

As shown in FIG. 3, the water path distribution module 9 is further provided with a first transition chamber 17, and the first switching component 5 is provided in the first transition chamber 17. The first transition chamber 17 is divided into a first valve chamber 171 and a first back pressure chamber 172 by the first switching component 5, the first valve chamber 171 is in communication with the distribution chamber 15, and the first valve chamber 171 is in communication with the first back pressure chamber 172 through a small hole provided in the first switching component 5. The first back pressure chamber 172 is provided with a first pressure relief port 173. The first driving component 2 controls whether the first pressure relief port 173 is opened, so that the first switching component 5 controls the switch of communication between the first valve chamber 171 and the multiple first water outlet channels 12, 13 according to a change of water pressure in the first back pressure chamber 172. The first switching component 5 includes a water-stop membrane 52, a sliding rod 51, and a sealing pad 53. The water-stop membrane 52 is sleeved at one end of the sliding rod 51 and the sealing pad 53 is sleeved at the other end of the sliding rod 51. A first communication port-I 19 is provided between the first valve chamber 171 and a portion of the first water outlet channels, a second communication port-I 110 is provided between the first valve chamber 171 and the remaining first water outlet channels, the sliding rod 51 is passed through the first communication port-I 19 and the second communication port-I 110, the water-stop membrane 52 controls whether the first communication port-I 19 is opened, and the sealing pad 53 controls whether the second communication port-I 110 is opened. One end of the sliding rod 51 is provided with a supporting disk for supporting the water-stop membrane 52, and a peripheral edge of the water-stop membrane 52 is in a pressed state within the first transition chamber 17. The supporting disk is provided with a small water column at a position corresponding to a small water hole provided on the water-stop membrane 52, and the small water column passes through the small water hole. A first elastic member 4 for resetting the first switching component 5 is provided in the first back pressure chamber 172, and the first elastic member 4 is a spring.

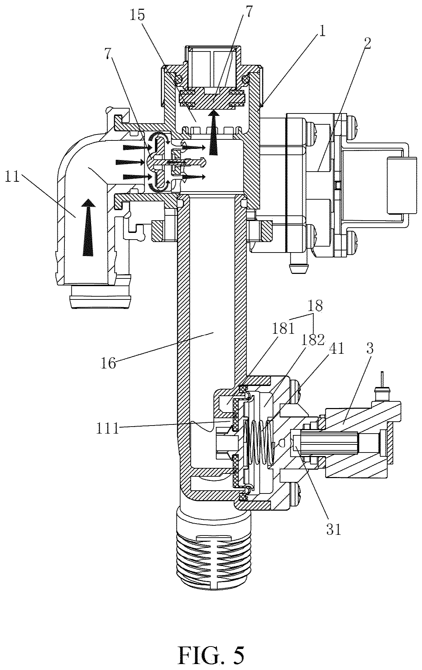

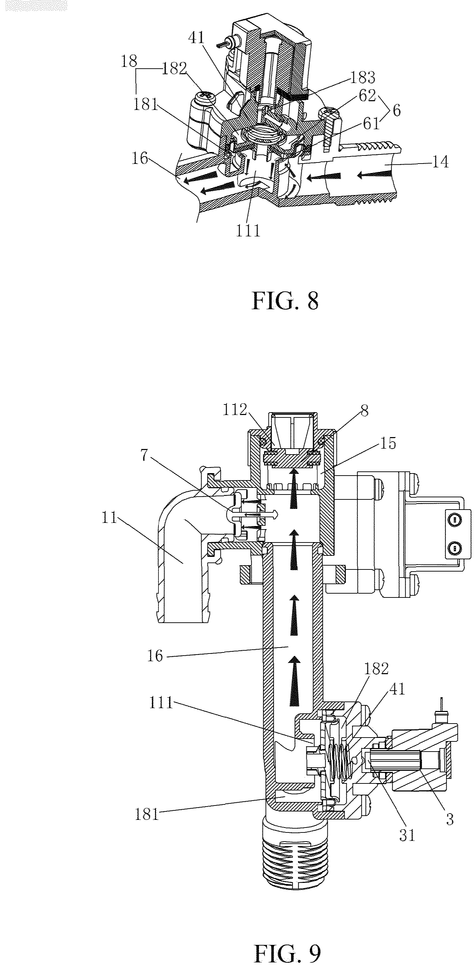

As shown in FIGS. 5, 8 and 9, the pressure water inlet module 10 is further provided with a second transition chamber 18, the second switching component 6 is provided in the second transition chamber 18, and the second transition chamber 18 is divided into a second valve chamber 181 and a second back pressure chamber 182 by the second switching component 6. The second valve chamber 181 is in communication with the second water inlet channel 14, and the second valve chamber 181 is in communication with the second back pressure chamber 182 through a small hole provided in the second switching component 6. The second back pressure chamber 182 is provided with a second pressure relief port 183 (as shown in FIG. 8). The second driving component 3 controls whether the second pressure relief port 183 is opened, so that the second switching component 6 controls whether the second valve chamber 181 is in communication with the first water path 16 according to a change of water pressure in the second back pressure chamber 182. A third communication port-I 111 is provided between the second valve chamber 181 and the first water path 16, and the second switching component 6 is a membrane component that controls whether the third communication port-I 111 is opened. The second switching component 6 specifically includes a water-stop membrane 61 and a supporting disk 62, the water-stop membrane 61 is sleeved on the supporting disk 62, and a peripheral edge of the water-stop membrane 61 is in a pressed state within the second transition chamber 18. The supporting disk 62 is provided with a small water column at a position corresponding to a small water hole provided on the water-stop membrane 61, and the small water column passes through the small water hole. A second elastic member 41 for resetting the second switching component 6 is provided in the second back pressure chamber 182, and the second elastic member 41 is a spring.

The first communication port-I 19, the first communication port-I 110, and the third communication port-I 111 are, respectively, the first communication port 19, the second communication port 110, and the third communication port 111 of the Chinese prior application No. 202210992687.6.

In this embodiment, the first driving component and the second driving component are electronically controlled driving mechanisms, but the present application is not limited thereto. In other embodiments, the first driving component and the second driving component are purely mechanical driving mechanisms, such as pressing driving mechanisms, respectively. In this embodiment, the first driving component and the second driving component are solenoid valve heads, respectively. For the convenience of distinction below, the two solenoid valve heads are named as the first solenoid valve head 2 and the second solenoid valve head 3, respectively, that is, the first driving component is the first solenoid valve head 2 and the second driving component is the second solenoid valve head 3. In other embodiments, the first driving component and the second driving component each may be a motor driving mechanism, the motor driving mechanism is an electrodynamic driving structure using a motor as a power source, and the motor is preferably a stepping motor with low power consumption. As shown in FIG. 1, the first solenoid valve head 2 includes a fixation bracket 21, a coil 22, a moving iron core (not shown in the figure) and a reset spring (not shown in the figure). The coil 22 is fixed outside the water path distribution module 9 by the fixation bracket 21, the moving iron core is movably provided in the coil 22, and a plug 23 is provided at one end of the moving iron core and configured for opening and closing the first pressure relief hole 173. The reset spring is sleeved outside the moving iron core and used for providing a reset for the moving iron core. When the coil 22 is energized, the moving iron core moves in a direction away from the first pressure relief hole 173 by an action of the magnetic field against an elastic force of the reset spring, so that the plug 23 opens the first pressure relief hole 173. When the coil 22 is powered off, the moving iron core moves in a direction close to the first pressure relief hole 173 by the reset force of the reset spring, so that the plug 23 closes the first pressure relief hole 173. The structure and working principle of the second solenoid valve head 3 are consistent or basically consistent with the structure and working principle of the first solenoid valve head 2, which will not be described in detail. Since the coils of the first solenoid valve head 2 and the second solenoid valve head 3 have low power consumption and can be operated with a small current, the first solenoid valve head 2 and the second solenoid valve head 3 can be powered by a super-capacitor and/or a backup battery.

As shown in FIG. 5, the water path distribution module 9 is further provided with an atmospheric port 112 communicating with the distribution chamber, and the atmospheric port 112 is controlled to open and close by an anti-siphon float 8 provided in the distribution chamber 15. An outlet of the first water path 16 is opposite to the anti-siphon float 8, so that when water flows out of the outlet of the first water path 16, the anti-siphon float 8 can be quickly pushed upward to close the atmospheric port 112. A lower end of the anti-siphon float 8 is sleeved with two water-stop pad 81. The atmospheric port 112 and the anti-siphon float 8 are provided so that when the hybrid distribution valve of the present application is applied to the toilet flushing system, water in the water tank of toilet can be prevented from being sucked back into the tap water pipeline when the tap water pipeline connected to the second water inlet channel 114 has negative pressure. In other embodiments, the present application does not provide the atmospheric port and the anti-siphon float, but uses the anti-siphon device installed between the second water inlet pipeline and the tap water pipeline or on the tap water pipeline to achieve the anti-siphon.

A one-way valve 7 is mounted within the first water inlet channel 11 and allows only water to flow from the first water inlet channel 11 into the distribution chamber 15. Specifically, the one-way valve 7 is located at an outlet of the first water inlet channel 11, but the present application is not limited thereto. In this way, it is possible to prevent water from crossflowing from the distribution chamber 15 into the first water inlet channel 11 when water enters the first water path 16. Since a connection or disconnection between the first water path 16 and the second water inlet channel 14 is controlled by the second switching mechanism (i.e., the second solenoid valve head 6), there is no need to provide a one-way valve in the first water path 16.

The pressure water inlet module 10 is further provided with a second water outlet channel 113 and a second water path 114, and the second water outlet channel 113 is in communication with the second water inlet channel 14 through the second water path 114.

A quantity of the first water outlet channels 12, 13 is specifically two, but is not limited thereto.

As shown in FIG. 1, the water path distribution module 9 is specifically assembled by a main valve body 91, an anti-siphon cover 92, a valve cover 93, and the like. The atmospheric port 112 is provided in the anti-siphon cover 12, and the anti-siphon cover 12 and the main valve body 11 are fitted with a sealing ring 94. The pressure water inlet module 10 has a substantially inverted Y-shape.

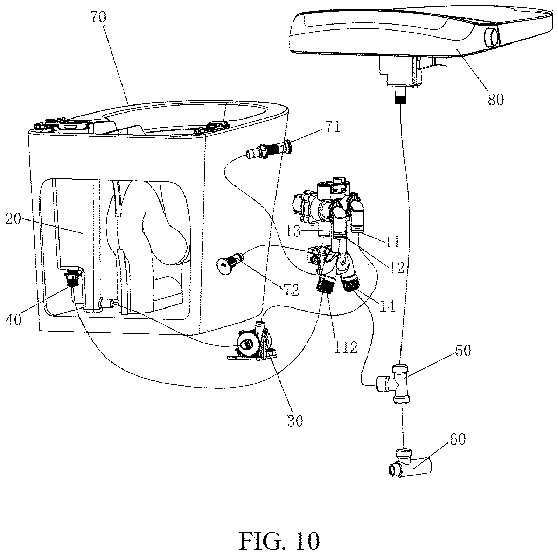

A hybrid distribution valve of the present application may be applied to a toilet flushing system, as shown in FIG. 10. The toilet flushing system includes a water tank 20, a water pump 20, and a water inlet mechanism for replenishing water to the water tank 20. A water inlet end of the water pump 30 is connected to the water tank 20. In specific application, the first water inlet channel 11 is connected to a water outlet end of the water pump 30, and the second water inlet channel 14 is connected to the pressure water source. One first water outlet channel 12 is connected to a ring-washing part of a toilet body, and the other first water outlet channel 13 is connected to a spray part of the toilet body.

A hybrid distribution valve of the present application is used in conjunction with a water pump to achieve flushing of the toilet. Under a condition that the water pump fails to work due to power failure or other factors, the hybrid distribution valve of the present application can also connect to a pressure water source (i.e., tap water pipeline) by its second water inlet channel 14 to flush the toilet with tap water supply, thereby solving the problem that the toilet cannot be used normally because the water pump fails to work. The present application also allows users to switch between water pump pressurization and tap water supply according to the magnitude of the water pressure of tap water under the condition of no power off, thereby achieving the purpose of energy saving and meeting the flushing requirements. For example, during the peak period of tap water usage (water pressure is unstable) or when the water pressure of tap water is low, the water pump pressurization supply mode is used to achieve flushing of the toilet. During the non-peak period of tap water usage and when the water pressure is high, the tap water supply mode is used to achieve flushing of the toilet. The design of the hybrid distribution valve of the present application also enables that the toilet flushing system does not need to introduce an additional water inlet valve group, so that an overall structure of the toilet flushing system is simpler and the cost is lower. In particular, when the first driving component and the second driving component adopt a mechanical driving mechanism or an electronically controlled driving mechanism with low power consumption and low current driving (for example, the first solenoid valve head 2 and the second solenoid valve head 3, which can be directly powered by a super-capacitor or a battery), the present application can still work normally even if the water pump cannot work due to power failure, thereby ensuring that the toilet can still be flushed normally after power failure.

An initial state of the hybrid distribution valve of the present application is shown in FIG. 3, in which the first communication port-I 19 is closed and the second communication port-I 110 is in an open state, so that one first water outlet channel 12 corresponding to the second communication port-I 110 is in an open state, and the other first water outlet channel 13 corresponding to the first communication port-I 19 is in a closed state. The hybrid distribution valve of the present application has two working modes, and the two working modes of a hybrid distribution valve of the present application are described below in connection with the flushing process of a toilet.

The first working mode of the present application is as follows.

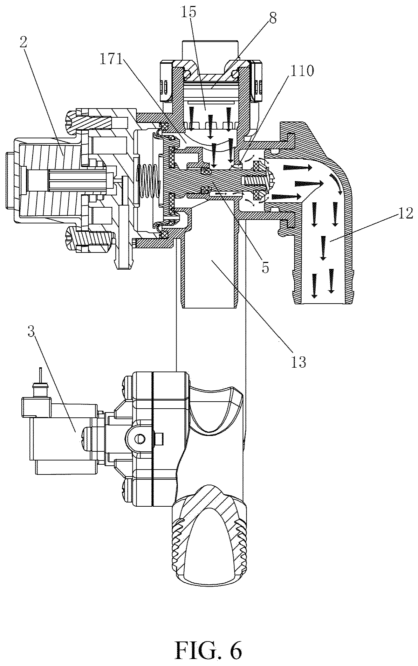

In a mode of the water pump 30 being pressurized, when the water pump 30 is started, the water pump 30 pumps out water in the water tank 20, water enters the first water inlet channel 11, the water pressure pushes the one-way valve 7 to open, water enters the distribution chamber 15, and pushes the anti-siphon float 8 to move up to close the atmospheric port 112, as shown in FIG. 5. Before a coil 22 of the first solenoid valve head 2 is energized, the first water outlet channel 12 is in communication with the distribution chamber 15, so that water flows from the distribution chamber 15, the first valve chamber 171, the second communication port-I 110 to the first water outlet channel 12 sequentially, and finally flows out of the first water outlet channel 12 (as shown in FIG. 6), thereby flushing a pot surface of the toilet.

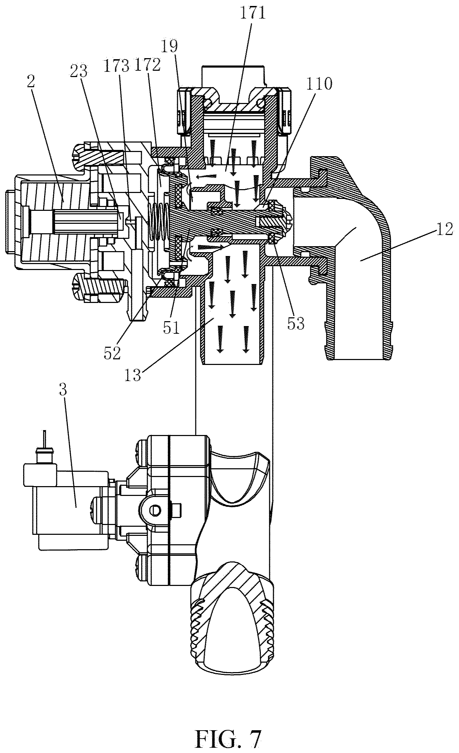

When a preset water outlet time of the first water outlet channel 12 is reached, the toilet finishes flushing the pot surface, the coil 22 of the first solenoid valve head 2 is energized, so that the plug 23 opens the first pressure relief hole 173. Water in the first back pressure chamber 172 flows out through the first pressure relief port 173, so that the water pressure in the first back pressure chamber 172 is greatly reduced, at this time, a water pressure in the first valve chamber 171 is much greater than a water pressure in the first back pressure chamber 172. Hence, the first switching component 5 moves in a direction toward the first back pressure chamber 172 under a push of the water pressure in the first valve chamber 171, thereby opening the first communication port-I 19. Water flows out of the other first water outlet channel 13, as shown in FIG. 7, thereby flushing away dirt at a bottom of a urinal of the toilet. At the same time, the sealing pad 53 closes the second communication port-I 110 so that water cannot flow through the first water outlet channel 12. When the coil 22 of the first solenoid valve head 2 is powered off or is energized with a reverse current, the plug 23 of the first solenoid valve head closes the first pressure relief port 173. At this time, water in the first valve chamber 171 is gradually replenished into the first back pressure chamber 172 through a small hole on the water-stop membrane 52, so that the water pressure in the first back pressure chamber 172 gradually increases until it is equal to the water pressure of the first valve chamber 171. At this time, due to a relatively large cross-sectional area of the first back pressure chamber 172, the first switching component 5 moves in a direction away from the first back pressure chamber 172 under water pressure of the first back pressure chamber 172 and push of the first elastic member 4, thereby opening the second communication port-I 110 and closing the first communication port-I 19, and allowing the first switching component 5 to recover to the state shown in FIG. 3 and the water pump 30 also stops working.

The second working mode of the present application is as follows.

In a tap water supply mode, water enters the second water inlet channel 14. When the coil of the second solenoid valve head 3 is energized, a plug 31 of the second solenoid valve head 3 opens the second pressure relief hole 183, so that water in the second back pressure chamber 182 flows out through the second pressure relief port 183, and water pressure in the second back pressure chamber 182 is greatly reduced. At this time, water pressure in the second valve chamber 181 is much greater than water pressure in the second back pressure chamber 182. Hence, the second switching component 6 moves in a direction toward the second back pressure chamber 182 under a push of water pressure in the second valve chamber 181, thereby opening the third communication port-I 111, and allowing water to flow from the second valve chamber 181 and the third communication port-I 111 sequentially to the first water path 16, as shown in FIGS. 8 and 9. When water is output from the first water path 16, a water flow pushes the anti-siphon float 8 upward, causing the anti-siphon float 8 to move upward and close the atmospheric port 112. At the same time, a water flow pushes the one-way valve 7, causing the one-way valve 7 to close the first water inlet channel 11. Water flows from the distribution chamber 15, the first valve chamber 171, and the second communication port-I 110 sequentially to the first water outlet channel 12, and finally flows out of the first water outlet channel 12, as shown in FIG. 6, so as to flush the pot surface of the toilet. Since the second water outlet channel 113 is in communication with the second water inlet channel 14, when water enters the second water inlet channel 14, water is also discharged from the second water outlet channel 113 to supply water to other components requiring water.

When the preset water outlet time of the first water outlet channel 12 is reached, the toilet finishes flushing the pot surface, the coil 22 of the first solenoid valve head 2 is energized, so that the plug 23 opens the first pressure relief hole 173. Water in the first back pressure chamber 172 flows out through the first pressure relief port 173, so that the water pressure in the first back pressure chamber 172 is greatly reduced. At this time, a water pressure in the first valve chamber 171 is much greater than a water pressure in the first back pressure chamber 172. Hence, the first switching component 5 moves in a direction toward the first back pressure chamber 172 under a push of the water pressure in the first valve chamber 171, thereby opening the first communication port-I 19, and water flows out of the other first water outlet channel 13, as shown in FIG. 7, thereby flushing away dirt at the bottom of the urinal of the toilet. At the same time, the sealing pad 53 closes the second communication port-I 110, so that water cannot flow through the first water outlet channel 12. When the coil 22 of the first solenoid valve head 2 is powered off or is energized with a reverse current, the plug 53 of the first solenoid valve head closes the first pressure relief port 173. At this time, water in the first valve chamber 171 is gradually replenished into the first back pressure chamber 172 through a small hole in the water-stop membrane 52, and the water pressure in the first back pressure chamber 172 gradually increases until it is equal to the water pressure of the first valve chamber 171. At this time, due to a relatively large cross-sectional area of the first back pressure chamber 172, the first switching component 5 moves and resets in a direction away from the first back pressure chamber 172 under a water pressure of the first back pressure chamber 172 and a push of the first elastic member 7, thereby opening the second communication port-I 110 and closing the first communication port-I 19, so that the first switching component 5 returns to a state shown in FIG. 3, and the water pump 30 also stops working. Similarly, when the coil of the second solenoid valve head 3 is powered off or is energized with a reverse current, the plug 31 of the second solenoid valve head 3 closes the second pressure relief port 183. At this time, water in the second valve chamber 181 is gradually replenished into the second back pressure chamber 182 through a small hole in the water-stop membrane 61, so that the water pressure in the second back pressure chamber 182 gradually increases until it is equal to the water pressure of the second valve chamber 181. At this time, due to the relatively large cross-sectional area of the second back pressure chamber 182, a middle of the second switching component 6 moves and resets in a direction away from the second back pressure chamber 182 under a water pressure of the second back pressure chamber 182 and a push of the second elastic member 41, thereby closing the third communication port-I 111 and discommunicating the second water inlet channel 14 from the first water path 16.

Referring to FIGS. 1 to 10, a toilet flushing system of the present application includes a water tank 20, a water pump 30, and a water inlet mechanism for replenishing water to the water tank 20, and a water inlet end of the water pump 30 is in communication with the water tank 20. The toilet flushing system also includes a hybrid distribution valve as described in the present application. A water outlet end of the water pump 30 is in communication with the first water inlet channel 11, and the second water inlet channel 14 is used for connecting to a pressure water source. Specifically, the second water inlet channel 14 is connected to a tap water pipeline through a three-way pipe 50 and an angle valve 60 sequentially, and one remaining water path of the three-way pipe 50 is used for connecting to a water path corresponding to a smart toilet cover 80 of the toilet. Among multiple first water outlet channels 12, 13, a portion of the first water outlet channels are used to be in communication with a ring-washing part of the toilet body, and the remaining first water outlet channels are used to be in communication with a spray part of the toilet.

In this embodiment, the water inlet mechanism is specifically a mechanical water inlet valve 40 provided in the water tank, but the present application is not limited thereto. Since the pressure water inlet module 10 is further provided with the second water outlet channel 113, the second water outlet channel 113 is in communication with the water inlet end of the water inlet valve 40, so that the water inlet valve 40 may be directly supplied with water from the second water outlet channel 113, thereby reducing a quantity of tap water pipelines and angle valves configured for supplying water to the water inlet valve 40.

In this embodiment, the present application further includes a control panel, the control panel controls a coordinated action of the water pump 30, the first solenoid valve head 2, and the second solenoid valve head 3. The first solenoid valve head 2 and the second solenoid valve head 3 may be powered by a backup battery or a super-capacitor provided on the control panel.

In this embodiment, a structure, a working principle and the like of the hybrid distribution valve refer to the above description thereof, which will not be repeated herein.

The working principle of a toilet flushing system of the present application is as follows. When the water pump 30 is started, the water pump 30 pumps out water in the water tank 20, water enters the first water inlet channel 11, and the hybrid distribution valve works according to the first working mode described above, so as to complete the flushing of the toilet. When the water pump 30 cannot operate due to power failure or the like, and the hybrid distribution valve is changed to the tap water supply mode, the hybrid distribution valve operates according to the second working mode described above, so as to complete the flushing of the toilet.

Referring to FIGS. 1 to 10, a toilet according to the present application includes a toilet body 70 and further includes a toilet flushing system described above in the present application. Among the multiple first water outlet channels, some of the first water outlet channels communicate with a ring-washing part of the toilet body, and the remaining first water outlet channels communicate with a spray part of the toilet body. Specifically, the first water outlet channel 12 is in communication with the ring-washing part of the toilet body 70, and the other first water outlet channel 13 is in communication with the spray part of the toilet body 70.

In this embodiment, the ring-washing part is used for flushing the pot surface of the urinal of the toilet body 70, and includes any one or a combination of a ring-washing water path, a ring-washing port, and a ring-washing nozzle. The spray part is used for flushing dirt falling into the bottom of the toilet body 70 to a drain pipe of the toilet body 1, and includes any one or a combination of a spray water path, a spray port, and a spray nozzle. Specifically, the ring-washing part includes a ring-washing nozzle 71, the ring-washing nozzle 71 is mounted at a top of the urinal of the toilet body 70, and the ring-washing nozzle 71 may be replaced by the ring-washing water path or a ring-washing port provided at the top of the urinal. The spray part includes a spray nozzle 72, the spray nozzle 72 is mounted to the bottom of the urinal and is opposite to an inlet of the drain pipe of the toilet body 70, and the spray nozzle 72 may be replaced by the spray water path or a spray port provided at the bottom of the urinal and opposite to the inlet of the drain pipe. The toilet is a smart toilet, and the water tank 20 is a low water tank.

The flushing process of a toilet according to the present application is described above, which will not be repeatedly described.

### Second Embodiment

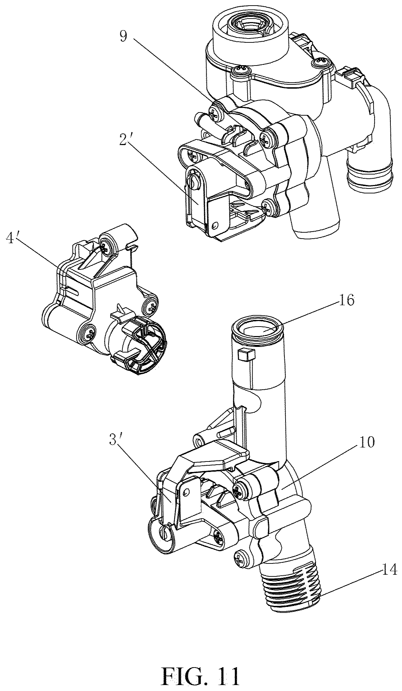

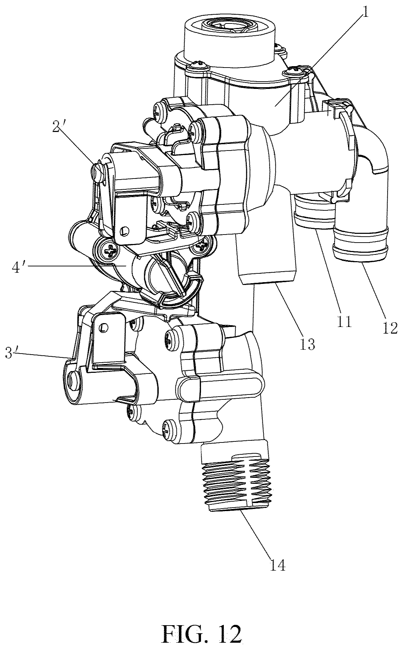

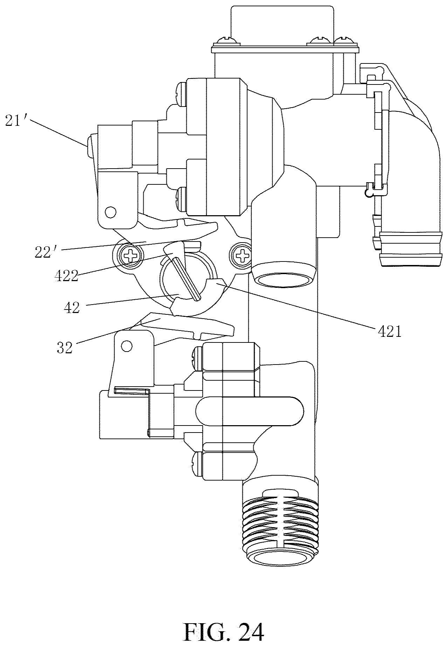

Referring to FIGS. 11 to 24, a hybrid distribution valve of the present application includes a water path distribution module 9 and a pressure water inlet module 10, and the water path distribution module 9 and the pressure water inlet module are integrated together to form a valve body assembly 1. The water path distribution module 9 is provided with a first water inlet channel 11, a distribution chamber 15 and multiple first water outlet channels 12, 13. The pressure water inlet module 10 is provided with a second water inlet channel 14 and a first water path 16. The first water inlet channel 11 and the first water path 16 are respectively communicated with the distribution chamber 15. A movable water-stop component is movably provided within the distribution chamber 15. When water enters the first water inlet channel 11, the movable water-stop component is pushed by a water pressure to prevent water from flowing to the first water path 16. When water enters the first water path 16, the movable water-stop component is pushed by a water pressure to prevent water from flowing to the second water inlet channel 11. Specifically, the distribution chamber 15 includes a first chamber body 153, a second chamber body 154 and a third chamber body 155. The first chamber body 153 is in communication with the first water inlet channel 11, the second chamber body 154 is in communication with the first water path 16, the first communication port-11 151 is provided between the first chamber body 153 and the third chamber body 155, the second communication port-11 152 is provided between the second chamber body 154 and the third chamber body 155, and the first communication port-11 151 is opposite to the second communication port-11 152. The movable water-stop component is movably provided in the third chamber body 155. When water enters the first water inlet channel 11, the movable water-stop component is pushed by a water pressure to close the second communication port-11 152. When water enters the first water path 16, the movable water-stop component is pushed by a water pressure to close the first communication port-11 151. The water path distribution module 9 is provided with a first switching mechanism, and the first switching mechanism controls whether a first water outlet channel is in communication with the third chamber body 155 of the distribution chamber 15. The pressure water inlet module 10 is provided with a second switching mechanism, the second switching mechanism controls whether the second water inlet channel 14 is in communication with the first water path 16. Thus, when the hybrid distribution valve of the present application is used in conjunction with the water pump to achieve flushing of the toilet and when the water pump fails to work due to power failure or the like, the hybrid distribution valve of the present application may also connect to a normal pressure water source by the second water inlet channel 14, thereby ensuring normal flushing of the toilet. The normal pressure water source refers to a municipal tap water supply source.

The first switching mechanism includes a first switching component 5 for controlling the switch of communication between the third chamber body 155 of the distribution chamber 15 and the first water outlet channels, and a first driving component 2' for driving the first switching component 5 to act. The second switching mechanism includes a second switching component 6 for controlling whether the second water inlet channel 14 is in communication with the first water path 16, and a second driving component 3' for driving the second switching component 6 to act. The present application also includes a driving module 4', the driving module 4' is provided in the valve body assembly 1 and located between the first driving component 2' and the second driving component 3'. The driving module 4' controls the first driving component 2' and the second driving component 3' to act coordinately, so as to switch the communication between the third chamber body 155 of the distribution chamber 15 and the first water outlet channels when water enters the first water inlet channel 11, and switch the communication between the third chamber body 155 of the distribution chamber 15 and the first water outlet channels when water enters the first water path 16.

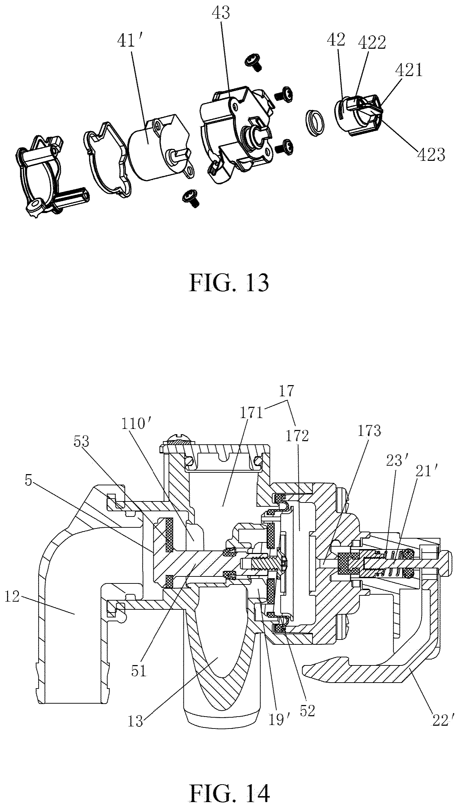

The driving module 4' drives the first driving component 2' and the second driving component 3' in a pushing manner. Specifically, as shown in FIG. 13, the driving module 4' includes a motor 41' and a switching rotor 42. The switching rotor 42 is driven by the motor 41'. A first driving part 421 and a second driving part 422 are provided on the switching rotor 42. The switching rotor 42 has a first working state in which the first driving part 421 pushes the first driving component 2', and a second working state in which the second driving component 3' is first pushed by the first driving part 421 and then the first driving component 2' is pushed by the second driving part 422. Specifically, the first driving part 421 and the second driving part 422 are provided at an edge of a same end of the switching rotor 42 and are distributed along a circumferential direction of the switching rotor 42. A circumferential dimension of the first driving part 421 is greater than a circumferential dimension of the second driving part 422. Specifically, the first driving part 421 has an arc shape and the second driving part 422 has a block shape. The switching rotor 42 is further provided with an operation part 423 adapted to manually rotate the switching rotor 42. The motor 41' is specifically a stepping motor. The driving module 4' further includes a housing assembly 43 for fixing the motor 41', the motor 41' is mounted to the housing assembly, and the housing assembly is fixedly connected to the valve body assembly 1.

As shown in FIG. 14, the water path distribution module 9 is further provided with a first transition chamber 17, and the first switching component 5 is provided in the first transition chamber 17. The first transition chamber 17 is divided into a first valve chamber 171 and a first back pressure chamber 172 by the first switching component 5, the first valve chamber 171 is in communication with the third chamber body 155 of the distribution chamber 15, and the first valve chamber 171 is in communication with the first back pressure chamber 172 through a small hole provided in the first switching component 5. The first back pressure chamber 172 is provided with a first pressure relief port 173. The first driving component 2' controls whether the first pressure relief port 173 is opened, so that the first switching component 5 controls the switch of communication between the first valve chamber 171 and the multiple first water outlet channels 12, 13 according to a change of water pressure in the first back pressure chamber 172. The first switching component 5 includes a water-stop membrane 52, a sliding rod 51, and a sealing pad 53. The water-stop membrane 52 is sleeved at one end of the sliding rod 51, and the sealing pad 53 is sleeved at the other end of the sliding rod 51. A third communication port-11 19' is provided between the first valve chamber 171 and a portion of the first water outlet channels, a fourth communication port 110' is provided between the first valve chamber 171 and the remaining first water outlet channel, the sliding rod 51 passes through the third communication port-11 19' and the fourth communication port 110', the water-stop membrane 52 controls whether the third communication port-11 19' is opened, and the sealing pad 53 controls whether the fourth communication port 110' is opened. One end of the sliding rod 51 is provided with a supporting disk for supporting the water-stop membrane 52, and a peripheral edge of the water-stop membrane 52 is in a pressed state within the first transition chamber 17. The supporting disk is provided with a small water column at a position corresponding to a small water hole provided on the water-stop membrane 52, and the small water column passes through the small water hole.

The first communication port-11 151, the second communication port-11 152, and the third communication port-11 19' are, respectively, the first communication port 151, the second communication port 152, and the third communication port 19 of the Chinese prior application No. 202210993995.0.

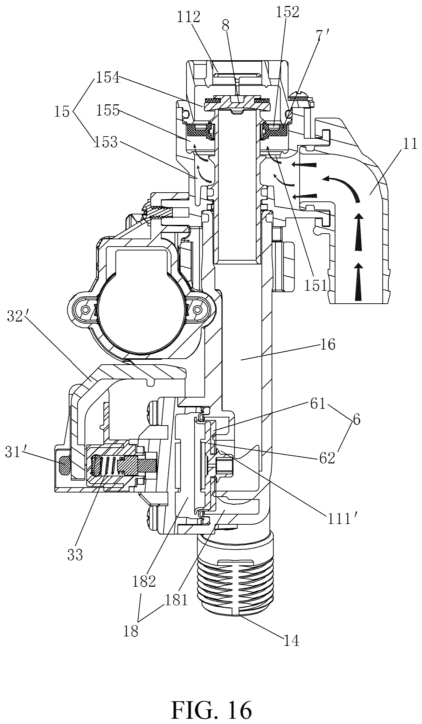

As shown in FIG. 16, the pressure water inlet module 10 is further provided with a second transition chamber 18, the second switching component 6 is provided in the second transition chamber 18, and the second transition chamber 18 is divided into a second valve chamber 181 and a second back pressure chamber182 by the second switching component 6. The second valve chamber 181 is in communication with the second water inlet channel 14, and the second valve chamber 181 is in communication with the second back pressure chamber 182 through a small hole provided in the second switching component 6. The second back pressure chamber 182 is provided with a second pressure relief port (not shown in FIG. 16). The second driving component 3' controls whether the second pressure relief port is opened, so that the second switching component 6 controls whether the second valve chamber 181 is in communication with the first water path 16 according to a change of water pressure in the second back pressure chamber 182. A fifth communication port 111' is provided between the second valve chamber 181 and the first water path 16, and the second switching component 6 is a membrane component that controls whether the fifth communication port 111' is opened. The second switching component 6 specifically includes a water-stop membrane 61 and a supporting disk 62, the water-stop membrane 61 is sleeved on the supporting disk 62, and a peripheral edge of the water-stop membrane 61 is in a pressed state within the second transition chamber 18. The supporting disk 62 is provided with a small water column at a position corresponding to a small water hole provided on the water-stop membrane 61, and the small water column passes through the small water hole.

As shown in FIG. 14, the first driving component 2' includes a first driving rod 22' and a first on-off component 21' for opening and closing the first pressure relief port 173. The first on-off component 21' is movably provided in the valve body assembly 1, and is fitted with the valve body assembly 1 through a first reset component 23'. The first driving rod 22' is movably connected with the first on-off component 21', and the first driving rod 22' is pushed to drive the first on-off component 21' to cause the first on-off component 21' to open the first pressure relief port 173. When the first driving rod 22' releases the first on-off component 21', the first on-off component 21' is reset by the first reset component 23', thereby closing the first pressure relief port 173. The second driving component 3' includes a second driving rod 32 and a second on-off component 31' for opening and closing the second pressure relief port. The second on-off component 31' is movably provided in the valve body assembly 1, and is fitted with the valve body assembly 1 through a second reset component 33. The second driving rod 32 is movably connected with the second on-off component 31', and the second driving rod 32 is pushed to drive the second on-off component 31' to cause the second on-off component 31' to open the second pressure relief port. When the second driving rod 32 releases the second on-off component 31', the second on-off component 31' is reset by the second reset component 33, thereby closing the second pressure relief port 173. Since the driving module 4' drives the first driving component 2' and the second driving component 3' in a pushing manner, the main body that pushes the first driving rod 22' and the second driving rod 32 is the driving module 4'. Specifically, the first driving rod 22' is provided opposite to the second driving rod 32, the switching rotor 42 is located between the first driving rod 22' and the second driving rod 32, the first driving part 421 is used to push the first driving rod 22' or the second driving rod 32, and the second driving part 422 is used to push the second driving rod 32. Each of the first reset component 23' and the second reset component 33 is a spring. The first on-off component 21' and the second on-off component 31' respectively include a movable rod and a plug provided at one end of the movable rod, and the other end of the movable rod is movably connected to the first driving rod 22' or the second driving rod 32.

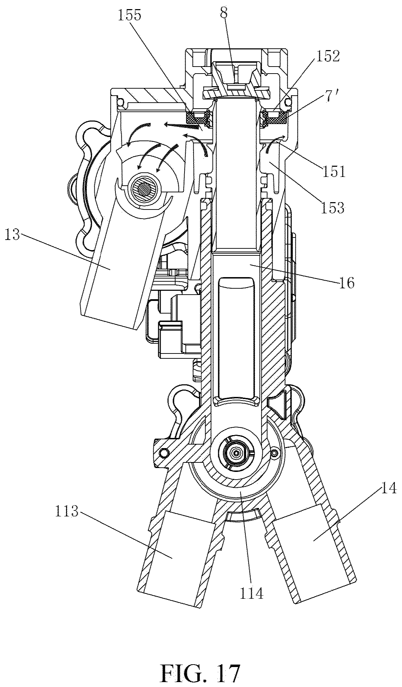

As shown in FIG. 16, the water path distribution module 9 is further provided with an atmospheric port 112 communicating with the second chamber body 154 of the distribution chamber, and the atmospheric port 112 is controlled to open and close by an anti-siphon float 8 provided in the second chamber body 154. An outlet of the first water path 16 is opposite to the anti-siphon float 8, so that when water flows out of the outlet of the first water path 16, the anti-siphon float 8 can be quickly driven to move upward to close the atmospheric port 112, and when the outlet of the first water path 16 stops discharging water, the anti-siphon float 8 falls by its own weight, as shown in FIGS. 16 and 17. The atmospheric port 112 and the anti-siphon float 8 are provided so that when the hybrid distribution valve of the present application is applied to the toilet flushing system, water in the water tank of the toilet can be prevented from being sucked back into the tap water pipeline when the tap water pipeline connected to the second water inlet channel 14 has negative pressure. In other embodiments, the present application does not provide the atmospheric port and the anti-siphon float, but uses the anti-siphon device installed between the second water inlet pipeline and the tap water pipeline or on the tap water pipeline to achieve the anti-siphon.

In this embodiment, the valve body assembly 1 is further provided with a second water outlet channel 113 and a second water path 114, and the second water outlet channel 113 is in communication with the second water inlet channel 14 through the second water path 114.

As shown in FIG. 16, a portion of the third chamber body 155 of the distribution chamber 15 between the first communication port-11 151 and the second communication port-11 152 is an annular space, and the movable water-stop component is an annular two-way unidirectional valve sheet 7' that is sleeved in the annular space. In this way, the annular space may be used to guide the motion of the two-way unidirectional valve sheet 7', so that the motion of the two-way unidirectional valve sheet 7' is stabilized.

In this embodiment, a quantity of the first water outlet channels 12 and 13 is specifically two, but the quantity is not limited thereto.

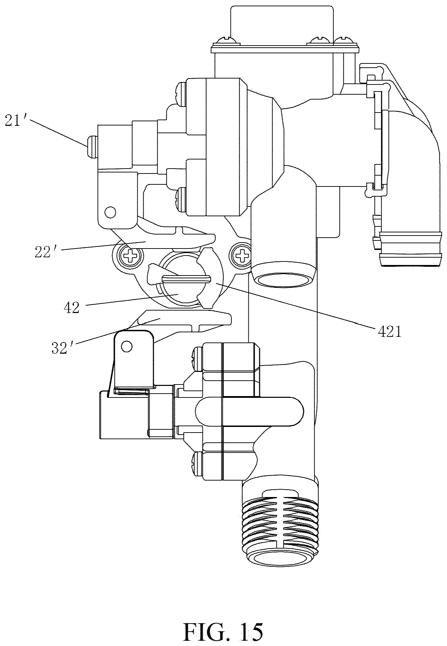

An initial state of the hybrid distribution valve of the present application is shown in FIG. 15, in which the switching rotor 42 does not push the first driving rod 22' and the second driving rod 32, the third communication port-11 19' is closed, and the fourth communication port 110' is in an open state. Hence, the first water outlet channel 12 corresponding to the fourth communication port 110' is in an open state, and the other first water outlet channel 13 corresponding to the third communication port-11 19' is in a closed state.

The present application has two working modes and the first working mode is as follows.

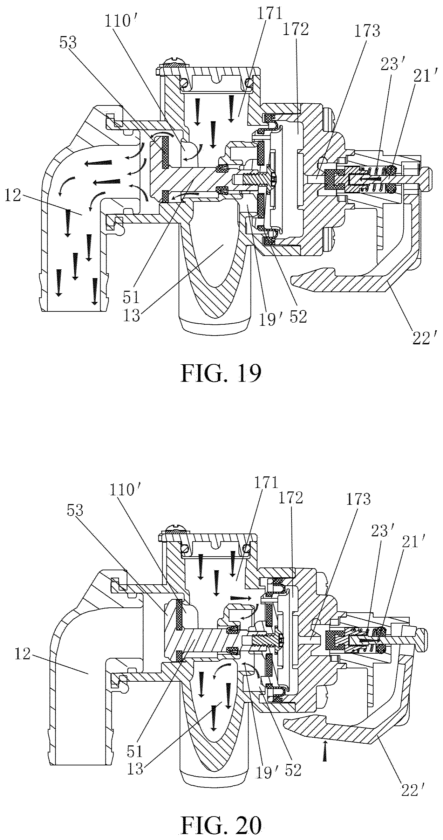

Water enters the first water inlet channel 11, and a water flow pushes the two-way unidirectional valve sheet 7' upward, so that the two-way unidirectional valve sheet 7' opens the first communication port-11 151 and closes the second communication port-11 152, and water flows from the first chamber body 153, the third chamber body 155 of the distribution chamber 15, the first valve chamber 171 and the fourth communication port 110' sequentially to the first water outlet channel 12, and finally flows out of the first water outlet channel 12, as shown in FIG. 19.

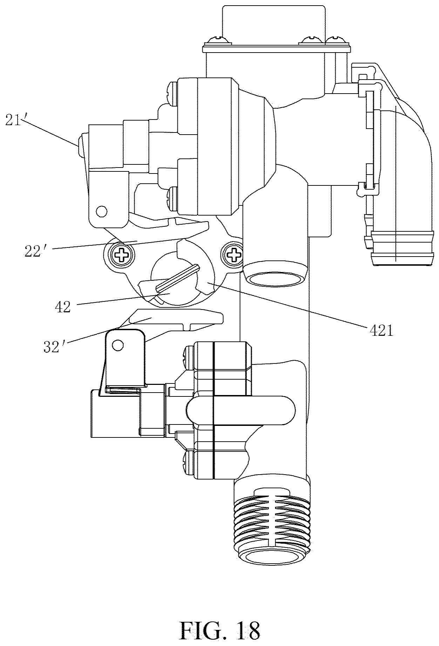

When a preset water outlet time of the first water outlet channel 12 is reached, the motor 41' starts to drive the switching rotor 42 to rotate counterclockwise, and the first driving part 421 on the switching rotor 42 pushes the first driving rod 22', as shown in FIG. 18, so that the first driving rod 22' pulls the first on-off component 21' outward, thus opening the first pressure relief port 173. Water in the first back pressure chamber 172 flows out through the first pressure relief port 173, so that the water pressure in the first back pressure chamber 172 is greatly reduced. At this time, a water pressure in the first valve chamber 171 is much greater than a water pressure in the first back pressure chamber 172. Therefore, the first switching component 5 moves in a direction toward the first back pressure chamber 172 under a push of the water pressure in the first valve chamber 171, thereby opening the third communication port-11 19', and water flows out of the other first water outlet channel 13, as shown in FIG. 20. At the same time, the sealing pad 53 closes the fourth communication port 110' so that water is not discharged from the first water outlet channel 12. When the motor 41' drives the switching rotor 42 to reset to an initial position, the first driving part 421 of the switching rotor 42 releases the first driving rod 22', and the first on-off component 21' closes the first pressure relief port 173 by an action of the first reset component 23'. At this time, water in the first valve chamber 171 is gradually replenished into the first back pressure chamber 172 through a small hole in the water-stop membrane 52, so that a water pressure in the first back pressure chamber 172 is gradually increased until it is equal to a water pressure of the first valve chamber 171. At this time, due to a relatively large cross-sectional area of the first back pressure chamber 172, the first switching component 5 moves in a direction away from the first back pressure chamber 172 under the push of a water pressure of the first back pressure chamber 172, thereby opening the fourth communication port 110' and closing the third communication port-11 19'.

The second working mode of the present application is as follows.

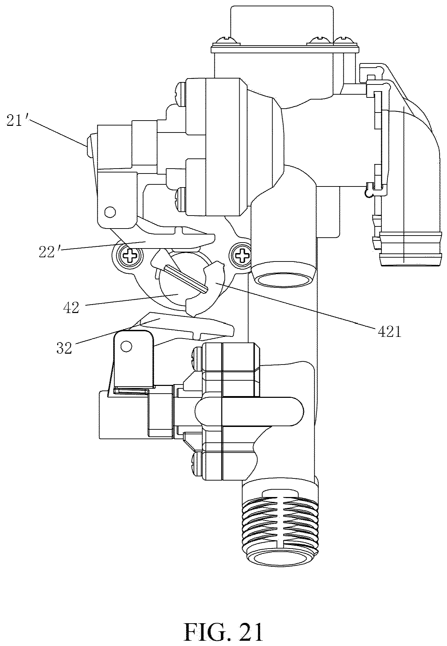

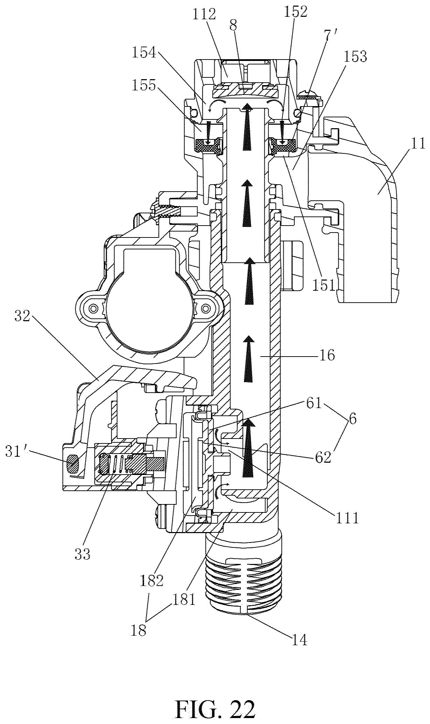

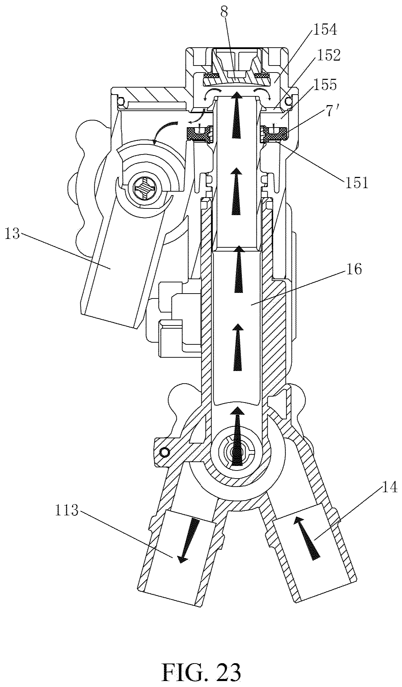

Water enters the second water inlet channel 14, the motor 41' starts to drive the switching rotor 42 to rotate clockwise, and the first driving part 421 on the switching rotor 42 pushes the second driving rod 32, as shown in FIG. 21, so that the second driving rod 32 pulls the second on-off component 31' outward, thus opening the second pressure relief port. Water in the second back pressure chamber 182 flows out through the second pressure relief port, so that the water pressure in the second back pressure chamber 182 is greatly reduced. At this time, a water pressure in the second valve chamber 181 is much greater than a water pressure in the second back pressure chamber 182. Therefore, the second switching component 6 moves in a direction toward the second back pressure chamber 182 under a push of the water pressure in the second valve chamber 181, thereby opening the fifth communication port 111' and allowing water to flow from the second valve chamber 181, the fifth communication port 111' sequentially to the first water path 16, as shown in FIG. 22. When water enters the second chamber body 154 of the distribution chamber from the first water path 16, a water flow pushes the anti-siphon float 8 upward, causing the anti-siphon float 8 to move upward and close the atmospheric port 112. Then, a water flow pushes the two-way unidirectional valve sheet 7' downward, so that the two-way unidirectional valve sheet 7' opens the second communication port-11 152 and closes the first communication port-11 151, as shown in FIG. 23. Water flows from the second chamber body 154, the third chamber body 155 of the distribution chamber 15, the first valve chamber 171 and the fourth communication port 110' sequentially to the first water outlet channel 12, and finally flows out of the first water outlet channel 12, as shown in FIG. 19. Since the second water outlet channel 113 is in communication with the second water inlet channel 14, when water enters the second water inlet channel 14, water is also output from the second water outlet channel 113 to supply water to other components (for example, a water inlet valve described below) requiring water.

When a preset water outlet time of the first water outlet channel 12 is reached, the motor 41' drives the switching rotor 42 to continue to rotate clockwise, so that the first driving part 421 on the switching rotor 42 keeps pushing the second driving rod 32, while the second driving part 422 on the switching rotor 42 pushes the first driving rod 22', as shown in FIG. 21. The first driving rod 22' pulls the first on-off component 21' outward, so that the first pressure relief port 173 is opened. Water in the first back pressure chamber 172 flows out through the first pressure relief port 173, so that the water pressure in the first back pressure chamber 172 is greatly reduced. At this time, a water pressure in the first valve chamber 171 is much greater than a water pressure in the first back pressure chamber 172. Therefore, the first switching component 5 moves in a direction toward the first back pressure chamber 172 under a push of the water pressure in the first valve chamber 171, thereby opening the third communication port-11 19', and water flows out of the other first water outlet channel 13, as shown in FIG. 20. At the same time, the sealing pad 53 closes the fourth communication port 110' so that water is not discharged from the first water outlet channel 12. When the motor 41' drives the switching rotor 42 to reset to an initial position, the switching rotor 42 releases the first driving rod 22' and the second driving rod 32, and the first on-off component 21' closes the first pressure relief port 173 by an action of the first reset component 23'. At this time, water in the first valve chamber 171 is gradually replenished into the first back pressure chamber 172 through a small hole in the water-stop membrane 52, so that a water pressure in the first back pressure chamber 172 is gradually increased until it is equal to a water pressure of the first valve chamber 171. At this time, due to a relatively large cross-sectional area of the first back pressure chamber 172, the first switching component 5 moves and resets in a direction away from the first back pressure chamber 172 under the push of a water pressure of the first back pressure chamber 172, thereby opening the fourth communication port 110' and closing the third communication port-11 19'. Similarly, the second on-off component 31' closes the second pressure relief port by an action of the second reset component 33. At this time, water in the second valve chamber 181 is gradually replenished into the second back pressure chamber 182 through a small hole in the water-stop membrane 61, so that a water pressure in the second back pressure chamber 182 is gradually increased until it is equal to the water pressure of the second valve chamber 181. At this time, due to a relatively large cross-sectional area of the second back pressure chamber 182, a middle of the second switching component 6 moves and resets in a direction away from the second back pressure chamber 182 under the push of a water pressure of the second back pressure chamber 182, thereby closing the fifth communication port 111' and discommunicating the second water inlet channel 14 from the first water path 16. In order to reset the first switching component 5 as quickly as possible, an elastic member may be additionally installed in the first back pressure chamber 172, and the elastic member may be used to accelerate a reset of the first switching component 5. Similarly, an elastic member may be additionally installed in the second back pressure chamber 182, and the elastic member may be used to accelerate a reset of the second switching component 6.

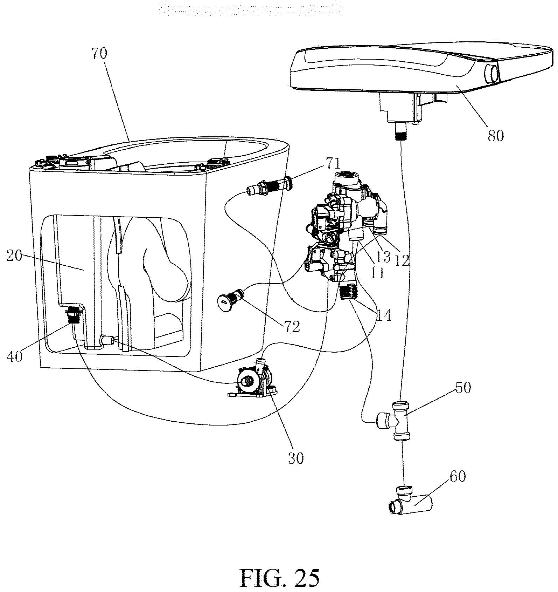

A hybrid distribution valve of the present application may be applied to a toilet flushing system, as shown in FIG. 25. The toilet flushing system includes a water tank 20, a water pump 20, and a water inlet mechanism for replenishing water to the water tank 20. A water inlet end of the water pump 30 is in communication with the water tank 20. In specific application, the first water inlet channel 11 is in communication with a water outlet end of the water pump 30, and the second water inlet channel 14 is connected to a normal pressure water source (i.e., a municipal tap water supply source). One first water outlet channel 12 is connected to a ring-washing part of a toilet body, and the other first water outlet channel 13 is connected to a spray part of the toilet body.

When the hybrid distribution valve of the present application is used in conjunction with the water pump to achieve flushing of the toilet and when the water pump fails to work due to power failure or the like, the hybrid distribution valve of the present application may also connect to a normal pressure water source (i.e., a municipal tap water supply source) by the second water inlet channel 14, thereby flushing the toilet with tap water supply and solving the problem that the toilet cannot be used normally because the water pump fails to work. Moreover, the present application also allows users to switch between water pump pressurization and tap water supply according to the water pressure of tap water under the condition of no power off, thereby achieving the purpose of energy saving and meeting the flushing requirements. For example, during the peak period of tap water usage (water pressure is unstable) or when the water pressure of tap water is low, the water pump pressurization supply mode is used to achieve flushing of the toilet. During the non-peak period of tap water usage and when the water pressure is high, the tap water supply mode is used to achieve flushing of the toilet. A provision of the movable water-stop component makes it possible to prevent water from crossflowing with each other and affecting a normal operation when water enters the first water inlet channel 11 and the first water path 16 respectively. The design of the hybrid distribution valve of the present application also enables that the toilet flushing system does not need to introduce an additional water inlet valve group, so that an overall structure of the toilet flushing system is simpler and the cost is lower.

Referring to FIGS. 11 to 25, a toilet flushing system of the present application includes a water tank 20, a water pump 30, and a water inlet mechanism for replenishing water to the water tank 20, and a water inlet end of the water pump 30 is in communication with the water tank 20. The toilet flushing system also includes a hybrid distribution valve as described in the present application. A water outlet end of the water pump 30 is in communication with the first water inlet channel 11, and the second water inlet channel 14 is used for connecting to a normal pressure water source. Specifically, the second water inlet channel 14 is connected to a tap water pipeline through a three-way pipe 50 and an angle valve 60 sequentially, and one remaining water path of the three-way pipe 50 is used for connecting to a water path corresponding to a smart toilet cover 80 of the toilet. Among multiple first water outlet channels 12, 13, a portion of the first water outlet channels are used to be in communication with a ring-washing part of the toilet body, and the remaining first water outlet channels are used to be in communication with a spray part of the toilet. Since a quantity of the first water outlet channels is specifically two, one first water outlet channel 12 is in communication with the ring-washing part of the toilet body, and the other first water outlet channel 13 is in communication with the spray part of the toilet body.

In this embodiment, the water inlet mechanism is specifically a mechanical water inlet valve 40 provided in the water tank, but the present application is not limited thereto. Since the pressure water inlet module 10 is further provided with the second water outlet channel 113, the second water outlet channel 113 is in communication with the water inlet end of the water inlet valve 40, so that the water inlet valve 40 may be directly supplied with water from the second water outlet channel 113, thereby reducing a quantity of tap water pipelines and angle valves configured for supplying water to the water inlet valve 40.

The present application also includes a control panel, and the control panel controls a coordinated action of the water pump 30 and the motor 41'. The motor 41' may be powered by a backup battery or a super-capacitor provided on the control panel.

In this embodiment, a structure, a working principle and the like of the hybrid distribution valve refer to the above description thereof, which will not be repeated herein.

The working principle of the toilet flushing system of the present application is as follows. When the water pump 30 is started, the water pump 30 pumps out water in the water tank 20, water enters the first water inlet channel 11, and the hybrid distribution valve works according to the first working mode described above, so as to complete the flushing of the toilet. When the water pump 30 cannot operate due to power failure or the like, and the hybrid distribution valve is changed to the tap water supply mode, the hybrid distribution valve operates according to the second working mode described above, so as to complete the flushing of the toilet.

Referring to FIGS. 11 to 25, a toilet according to the present application includes a toilet body 70 and further includes a toilet flushing system described above in the present application. Among the multiple first water outlet channels, some of the first water outlet channels are in communication with a ring-washing part of the toilet body, and the remaining first water outlet channels are in communication with a spray part of the toilet body. Specifically, one first water outlet channel 12 is in communication with the ring-washing part of the toilet body 70, and the other first water outlet channel 13 is in communication with the spray part of the toilet body 70.

In this embodiment, the ring-washing part is used for flushing the pot surface of the urinal of the toilet body 70, and includes any one or a combination of a ring-washing water path, a ring-washing port, and a ring-washing nozzle. The spray part is used for flushing dirt falling into a bottom of the toilet body 70 to a drain pipe of the toilet body 1, and includes any one or a combination of a spray water path, a spray port, and a spray nozzle. Specifically, the ring-washing part includes a ring-washing nozzle 71, the ring-washing nozzle 71 is mounted at a top of the urinal of the toilet body 70, and the ring-washing nozzle 71 may be replaced by the ring-washing water path or a ring-washing port provided at the top of the urinal. The spray part includes a spray nozzle 72, the spray nozzle 72 is mounted to the bottom of the urinal and opposite to an inlet of the drain pipe of the toilet body 70, and the spray nozzle 72 may be replaced by the spray water path or a spray port provided at the bottom of the urinal and opposite to the inlet of the drain pipe. The toilet is a smart toilet, and the water tank 20 is a low water tank.

The flushing process of the toilet according to the present application is described above, which will not be repeatedly described.

The parts not involved in the hybrid distribution valve, the toilet flushing system and the toilet of the present application are the same as the prior art or may be implemented by the prior art.

The above embodiments are merely used to further explain the hybrid distribution valve, the toilet flushing system and the toilet of the present application, but the present application is not limited to the embodiments. Any simple amendment, equivalent change and modification made to the above embodiments according to the technical essence of the present application fall within the protection scope of the technical solution of the present application.

### Industrial Applicability

Provided in the present invention are a hybrid distribution valve, a toilet flushing system and a toilet. The hybrid distribution valve includes a water path distribution module and a pressure water inlet module; the water path distribution module is provided with a first water inlet channel, a distribution chamber and multiple first water outlet channels; the pressure water inlet module is provided with a second water inlet channel and a first water path; and the first water inlet channel and the first water path are respectively in communication with the distribution chamber. The water path distribution module is provided with a first switching mechanism, and the first switching mechanism controls whether a first water outlet channel is in communication with the third chamber body. The pressure water inlet module is provided with a second switching mechanism, and the second switching mechanism controls whether the second water inlet channel is in communication with the first water path. When the hybrid distribution valve of the present application is applied to a toilet flushing system, the hybrid distribution valve can be connected to a water pump and a tap water pipeline at the same time, so as to adapt to different application environments of a toilet, thus achieving the purposes of saving energy and meeting flushing requirements. The hybrid distribution valve of the present application has a good industrial applicability.

## Claims

1. A hybrid distribution valve, comprising a water path distribution module and a pressure water inlet module, wherein the water path distribution module is provided with a first water inlet channel, a distribution chamber and a plurality of first water outlet channels, the pressure water inlet module is provided with a second water inlet channel and a first water path, and the first water inlet channel and the first water path are respectively in communication with the distribution chamber; the water path distribution module is provided with a first switching mechanism, and the first switching mechanism controls communication or discommunication between the first water outlet channels and the distribution chamber; the pressure water inlet module is provided with a second switching mechanism, and the second switching mechanism controls communication or discommunication between the second water inlet channel and the first water path.

2. A hybrid distribution valve, comprising a water path distribution module and a pressure water inlet module, wherein the water path distribution module is provided with a first water inlet channel, a distribution chamber and a plurality of first water outlet channels, the pressure water inlet module is provided with a second water inlet channel and a first water path, the second water inlet channel and the first water path are respectively in communication with the distribution chamber, and a movable water-stop component is movably provided within the distribution chamber; when water enters the first water inlet channel, the movable water-stop component is pushed by a water pressure to prevent water from flowing to the first water path; when water enters the first water path, the movable water-stop component is pushed by a water pressure to prevent water from flowing to the second water inlet channel; the water path distribution module is provided with a first switching mechanism, and the first switching mechanism controls communication or discommunication between the first water outlet channels and the distribution chamber; the pressure water inlet module is provided with a second switching mechanism, and the second switching mechanism controls communication or discommunication between the second water inlet channel and the first water path.

3. The hybrid distribution valve according to claim 1 or 2, wherein the first switching mechanism comprises a first switching component for controlling switch of communication between the distribution chamber and the first water outlet channels, and a first driving component for driving the first switching component to act; the second switching mechanism comprises a second switching component for controlling communication or discommunication between the second water inlet channel and the first water path, and a second driving component for driving the second switching component to act.

4. The hybrid distribution valve according to claim 3, wherein the water path distribution module is further provided with a first transition chamber, the first switching component is provided in the first transition chamber, and the first transition chamber is divided into a first valve chamber and a first back pressure chamber by the first switching component; the first valve chamber is in communication with the distribution chamber, and the first valve chamber is in communication with the first back pressure chamber through a small hole provided in the first switching component; the first back pressure chamber is provided with a first pressure relief port, and the first driving component controls opening or closing of the first pressure relief port, so that the first switching component controls switch of communication between the first valve chamber and the plurality of first water outlet channels according to a change of water pressure in the first back pressure chamber; the pressure water inlet module is further provided with a second transition chamber, the second switching component is provided in the second transition chamber, and the second transition chamber is divided into a second valve chamber and a second back pressure chamber by the second switching component; the second valve chamber is in communication with the second water inlet channel, and the second valve chamber is in communication with the second back pressure chamber through a small hole provided in the second switching component; the second back pressure chamber is provided with a second pressure relief port, and the second driving component controls opening or closing of the second pressure relief port, so that the second switching component controls communication or discommunication between the second valve chamber and the first water path according to a change of water pressure in the second back pressure chamber.

5. The hybrid distribution valve according to claim 4, wherein the first switching component comprises a water-stop membrane, a sliding rod, and a sealing pad; the water-stop membrane is sleeved at one end of the sliding rod and the sealing pad is sleeved at the other end of the sliding rod; a first communication port is provided between the first valve chamber and a portion of the first water outlet channels, a second communication port is provided between the first valve chamber and the remaining first water outlet channels, and the sliding rod is passed through the first communication port and the second communication port; the water-stop membrane controls opening or closing of the first communication port, and the sealing pad controls opening or closing of the second communication port; a third communication port is provided between the second valve chamber and the first water path, and the second switching component is a membrane component that controls opening or closing of the third communication port.

6. The hybrid distribution valve according to any one of claims 3-5, wherein the first driving component and the second driving component are a mechanical driving mechanism or an electronically controlled driving mechanism, respectively, and the electronically controlled driving mechanism comprises any one of a motor driving mechanism and a solenoid valve head; the electronically controlled driving mechanism is able to be powered by a super-capacitor and/or a backup battery.

7. The hybrid distribution valve according to claim 1 or 3 or 4 or 5, further comprising a one-way valve, wherein the one-way valve is mounted to the first water inlet channel, and the one-way valve allows only water to flow from the first water inlet channel into the distribution chamber.

8. The hybrid distribution valve according to claim 3, further comprising a driving module, wherein the driving module is provided between the first driving component and the second driving component, and the driving module controls the first driving component and the second driving component to act coordinately, so as to switch the communication between the distribution chamber and the first water outlet channels when water enters the first water inlet channel, and switch the communication between the distribution chamber and the first water outlet channels when water enters the first water path.

9. The hybrid distribution valve according to claim 8, wherein the driving module comprises a motor and a switching rotor, the switching rotor is driven by the motor, a first driving part and a second driving part are provided on the switching rotor; the switching rotor has a first working state in which the first driving part pushes the first driving component, and a second working state in which the second driving component is first pushed by the first driving part and then the first driving component is pushed by the second driving part.

10. The hybrid distribution valve according to claim 9, wherein the first driving part and the second driving part are provided at an edge of a same end of the switching rotor and are distributed along a circumferential direction of the switching rotor; a circumferential dimension of the first driving part is greater than a circumferential dimension of the second driving part; the switching rotor is further provided with an operation part adapted to manually rotate the switching rotor.

11. The hybrid distribution valve according to any one of claim 2 or 3 or 4 or claims 8-10, wherein the distribution chamber comprises a first chamber body, a second chamber body and a third chamber body, the first chamber body is in communication with the first water inlet channel, and the second chamber body is in communication with the first water path; a first communication port is provided between the first chamber body and the third chamber body, a second communication port is provided between the second chamber body and the third chamber body, and the movable water-stop component is movably provided in the third chamber body; when water enters the first water inlet channel, the movable water-stop component is pushed by a water pressure to close the second communication port; when water enters the first water path, the movable water-stop component is pushed by a water pressure to close the third chamber body of the first communication port; the first switching mechanism controls communication or discommunication between the first water outlet channels and the third chamber body of the distribution chamber; a portion of the third chamber body between the first communication port and the second communication port is an annular space, and the movable water-stop component is an annular two-way unidirectional valve sheet that is sleeved in the annular space.

12. The hybrid distribution valve according to claim 4, wherein the first driving component comprises a first driving rod and a first on-off component for opening and closing the first pressure relief port; the first on-off component is movably provided in the water path distribution module, and is fitted with the water path distribution module through a first reset component; the first driving rod is movably connected with the first on-off component, and the first driving rod is pushed to drive the first on-off component; the second driving component comprises a second driving rod and a second on-off component for opening and closing the second pressure relief port; the second on-off component is movably provided in the pressure water inlet module, and is fitted with the pressure water inlet module through a second reset component; the second driving rod is movably connected with the second on-off component, and the second driving rod is pushed to drive the second on-off component.

13. The hybrid distribution valve according to claim 4, wherein the first switching component comprises a water-stop membrane, a sliding rod, and a sealing pad; the water-stop membrane is sleeved at one end of the sliding rod, and the sealing pad is sleeved at the other end of the sliding rod; a third communication port is provided between the first valve chamber and a portion of the first water outlet channels, a fourth communication port is provided between the first valve chamber and the remaining first water outlet channels, and the sliding rod is passed through the third communication port and the fourth communication port; the water-stop membrane controls opening or closing of the third communication port, and the sealing pad controls opening or closing of the fourth communication port; a fifth communication port is provided between the second valve chamber and the first water path, and the second switching component is a membrane component that controls opening or closing of the fifth communication port.

14. The hybrid distribution valve according to any one of claims 1 to 5, wherein the water path distribution module is further provided with an atmospheric port communicating with the distribution chamber, and the atmospheric port is controlled to open and close by an anti-siphon float provided in the distribution chamber; an outlet of the first water path is opposite to the anti-siphon float.

15. The hybrid distribution valve according to any one of claims 1 to 5, wherein the pressure water inlet module is further provided with a second water outlet channel and a second water path, and the second water outlet channel is in communication with the second water inlet channel through the second water path.

16. A toilet flushing system, comprising a water tank and a water pump, a water inlet end of the water pump being in communication with the water tank; wherein the toilet flushing system further comprises the hybrid distribution valve according to any one of claims 1 to 15; a water outlet end of the water pump is in communication with the first water inlet channel, and the second water inlet channel is used for connecting to a normal pressure water source; a portion of the plurality of first water outlet channels are used to be in communication with a ring-washing part of a toilet body, and the remaining first water outlet channels are used to be in communication with a spray part of a toilet.

17. The toilet flushing system according to claim 16, wherein the pressure water inlet module is further provided with a second water outlet channel and a second water path, the second water outlet channel is in communication with the second water inlet channel through the second water path, and the second water outlet channel is in communication with a water inlet end of a water inlet valve provided in the water tank.

18. A toilet, comprising a toilet body, wherein the toilet further comprises the toilet flushing system according to claim 16 or 17, a portion of the plurality of first water outlet channels are in communication with the ring-washing part of the toilet body, and the remaining first water outlet channels are in communication with the spray part of the toilet body; the ring-washing part comprises one or a combination of a ring-washing water path, a ring-washing port, and a ring-washing nozzle, and the spray part comprises one or a combination of a spray water path, a spray port, and a spray nozzle.
